# EUROPÄISCHE PATENTSCHRIFT

(11) **EP 3 341 272 B1**
(45) Veröffentlichungstag und Bekanntmachung des Hinweises auf die Patenterteilung: **08.05.2019**
(21) Anmeldenummer: 16763193.6
(22) Anmeldetag: 19.07.2016
(51) Int. Cl.: B62J 7/08

(54) **FIXIER- UND/ODER ARRETIERUNGSSYSTEM**
FASTENING AND/OR LOCKING SYSTEM
SYSTÈME DE RETENUE ET/OU DE BLOCAGE

(30) Priorität: 24.08.2015 DE 202015005852 U
(43) Veröffentlichungstag der Anmeldung: 04.07.2018
(73) Patentinhaber: Ortlieb Sportartikel GmbH, 91560 Heilsbronn (DE)
(72) Erfinder: BOAS, Günter, 91560 Heilsbronn (DE)
(74) Vertreter: Schuhmann, Albrecht
(86) Internationale Anmeldenummer: PCT/DE2016/000285
(87) Internationale Veröffentlichungsnummer: WO 2017/032353

(56) Entgegenhaltungen:
- WO-A1-2006/086948
- DE-U1-202008 013 186
- DE-U1-202014 009 305

## Beschreibung

Die vorliegende Erfindung betrifft ein Fixier- und/oder Arretierungssystem zur Befestigung von Behältnissen an einer Befestigungsvorrichtung, insbesondere an einem Träger wie einem Gepäckträger bei welchem Befestigungselement an dem Träger oder an einem Zubehörteil für den Träger angebracht sind und in Aufnahmeelemente, welche an einem Behältnisses angebracht und/oder mit diesem verbunden sind eingreifen und mit diesem lösbar arretiert wird.

Zum Mitführen von Behältnissen wie Taschen, Koffer, Rucksäcke oder dergleichen an einem Zweirad oder allgemein an einem Träger sind verschiedene Systeme bekannt um Taschen oder andere Behältnisse mit dem Träger, insbesondere Gepäckträger zu verbinden, bzw. an diesem anzubringen. Besonderer Beliebtheit erfreuen sich dabei Systeme bei welchen die Taschen lösbar und einfach an einem Gepäckträger befestigt, justiert und wieder abgenommen werden können.

Eine derartige Ausführung ist z.B. in der DE 4041460A1 offenbart, welche eine Tasche mit einer auf ihrer Rückseite angeordnete Schiene zeigt, welche mit Haken ausgerüstet ist mittels welchen sich die Tasche in die obere Strebe eines Gepäckträgers einhängen lässt. Derartige Schienen sind in Neuerungen als Rast- oder Schwenkhaken ausgebildet und arretieren die Befestigung. Auch diese Varianten benötigen sehr große, stabile Haken oder Haken mit großen Auslenkungen.

Auch in der DE 202006017966U1 ist eine Variante für eine solche Befestigung von Behältnissen an einen Gepäckträger gezeigt bei welcher zwei Haken an die Rückseite der Tasche fest befestigt sind und mittels welchen die Tasche an einem Gepäckträger befestigt werden kann.

Als Haltevorrichtung zum Anbringen von Behältnissen sind auch speziell dafür vorbereitete Träger, insbesondere Gepäckträger bekannt, welche über fest angeordnete Befestigungsstellen für Behältnisse, wie z.B. Taschen verfügen. Beispielhaft ist hier die WO 2006/086948A1 zu nennen, in welcher ein Gepäckträger gezeigt ist, welcher mit pilzförmigen Befestigungselementen zum Anbringen von einem Behältnis ausgerüstet ist.

Die an dem Gepäckträger zur Verfügung gestellten Aufnahmepunkte für entsprechende Gegenstücke an Taschen werden bei Neuerungen auch als nachträglich montierbare Elemente zur Montage an einem Gepäckträger ausgebildet, womit nicht der gesamte Gepäckträger als Zubehörteil benötigt wird.

Bei den bekannten Systemen erfolgt die Befestigung der Tasche oder eines anderen Behältnisses an einem Gepäckträger mittels an der Tasche angebrachten Aufnahmepunkten, welche mit den Befestigungspunkten an einem Träger bzw. Gepäckträger in Eingriff gebracht werden. Die verwendeten Ausführungen von Aufnahmepunkten oder Elementen an Taschen sind dabei z.B. als an der Rückseite der Tasche an- oder aufgebrachte Haken, welche mit Elementen am Gepäckträger in Eingriff bringbar sind. Auch bekannt sind Schienen, welche auf der Rückseite der Tasche angebracht sind und über wenigstens einen Hakenmechanismus verfügen mit welchem dieser an wenigstens einem Befestigungselement am Gepäckträger angebracht wird.

Als nachteilhaft oder unbequem in der Handhabung wird bei vielen Befestigungsverfahren zum Anbringen und Befestigen von Behältnissen an einem Träger die Notwendigkeit gesehen, die Tasche beim Einhängen präzise über mehrere Stellen halten zu müssen um diese dann beim Absenken der Tasche oder des Behältnisses gleichzeitig die Aufnahmestellen an der Tasche oder des Behältnisses mit den Befestigungsstellen am Träger in Eingriff zu bringen in welchen diese einrasten. Dies ist für viele Anwender schwierig, insbesondere wenn die Tasche oder das Behältnis gefüllt ist und dadurch ein höheres Gewicht besitzt und das Halten der hohen Last in einer exakten Position sehr unbequem ist. Vorteilhaft dahingegen, zeigt die DE 202014009305.9 eine Arretiervorrichtung für Taschen an einem Gepäckträger mit pilzförmigen Aufnahmepunkten, welcher das Anbringen der Tasche sehr einfach durch Aufsetzen in nur einem Führungspunkt und anschließendes Einklappen oder eindrehen der Tasche erlaubt. Beim genannten einklappen oder einschwenken wird die Tasche fixiert, was durch Eingreifen der am Gepäckträger vorhandenen pilzförmigen Elemente in dafür vorgesehene Aufnahmeplatten an der Rückseite der Tasche erfolgt. Beim Einschwenken und Verriegeln bewegt sich die Tasche noch leicht, durch ihr Gewicht begünstigt, leicht nach unten und Nuten in dem Aufnahmeplatten nehmen die pilzförmigen Elemente des Gepäckträgers beim Absenken der Tasche sicher auf.

Ein weiterer Kritikpunkt an bekannten Befestigungsverfahren zum Anbringen und Befestigen von Behältnissen an einem Träger wird die Handhabung beim Abnehmen der Tasche oder des Behältnisses von einem Träger gesehen, da hierbei zusätzlich zum Anheben der Tasche noch gleichzeitig ein Entriegelungselement betätigt werden muss, was sehr oft eine Bedienung mit beiden Händen erforderlich macht. Dies ist auch in der schon verbesserten Ausführung nach DE 202014009305.9 der Fall, da hier die Tasche beim Abnehmen wenigstens in der Höhe soweit angehoben werden muss, dass die pilzförmigen Befestigungselemente die Nuten der Aufnahmeplatten an der Rückseite der Tasche oder des Behälters verlassen bzw. aus diesen austreten können.

Aufgabe der vorliegenden Erfindung ist es eine Haltevorrichtung zum Anbringen von Behältnissen an einem Träger, insbesondere zum Anbringen von Packtaschen oder ähnlichen Behältnissen an einem Zweirad bzw. an einem Gepäckträger zu schaffen, welche in der Handhabung nochmals verbessert sind und welche insbesondere das Abnehmen der Tasche von dem Gepäckträger leichter handhabbar machen. Insbesondere soll die Ausführung von auf der Rückseite glatten bzw. flachen Taschen möglich sein und die Handhabung beim Einhängen und Abnehmen der Tasche oder des Behältnisses von einem Gepäckträger erleichtert sein.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Befestigungs-, Fixier- und/oder Arretierungssystem für Behältnisse an einer Befestigungsvorrichtung, insbesondere an einem Träger wie einem Gepäckträger an welchem Befestigungspunkte angebracht und/oder positionierbar sind, welche mit, an einer Tasche oder einem Behälter anordenbaren Aufnahmeelementen korrespondieren und die Tasche oder den Behälter in einer definierten Position mittels wenigstens eines unteren, an der Tasche- oder Behälterrückseite anbringbaren Führungselementes und zweier oberer an der Tasche- oder Behälterrückseite angebrachten Aufnahmeelementen am Träger lösbar fixieren, wobei die beiden oben an der Taschen- oder Behälterrückseite anbringbaren Aufnahmeelemente entlang einer Kreisbahn angeordnet sind und mit einer im Wesentlichen durchlaufenden, der Kreisbahn folgenden, Führungsnut mit Überstand für die Aufnahme eines pilzförmigen Befestigungsmittels, welches am Gepäckträger anordenbar ist, ausgebildet sind, wobei jedes Aufnahmeelement mit einem federbelasteten, um eine Achse drehbar gelagerten Kipphebel ausgerüstet ist und jeweils ein Ende des Kipphebels in Richtung Taschen- oder Behälteroberkannte ragt und das andere, in eine Richtung orientiert, abgeschrägte Ende in die Führungsnut mit Überstand des Aufnahmeelements hineinragt und gegen die Federkraft mittels eines durchschiebenden, pilzförmigen Befestigungsmittels, nur in eine Richtung bewegbar ist.

Die Aufnahmeelemente sowie die Befestigungsmittel sind entlang einer Kreisbahn des unteren Befestigungsmittels mit dem Radius zu den oberen Befestigungsmittel angeordnet. Beim Einführen des im unteren Bereich einer Taschenrückseite angebrachten Führungselementes in das untere an einem Gepäckträger angeordneten Befestigungselements gleitet eine Nut des Führungselementes über den vergrößerten Durchmesser des pilzförmig ausgeführten Befestigungselements. Hierbei wird die Tasche an dem korrespondierenden Punkt von unterem Befestigungselement mit dem Führungselement drehbar gehalten. Die beiden oberen Befestigungselemente am Gepäckträger sind in gleichem Abstand zum unteren Befestigungspunkt angeordnet und die beiden oberen Aufnahmeelemente an der Taschenrückseite sind entlang dieser Kreisbahn angeordnet.

Die beiden oberen Aufnahmeelemente sind dabei in der Anordnung des drehbar gelagerten Kipphebels spiegelbildlich ausgebildet, was dazu führt, dass jeweils ein linkes oder ein rechtes oberes Aufnahmeelement, in welches ein pilzförmiges Befestigungselement in die Nut einfährt, nur in einer Richtung an dem Befestigungsmittel vorbei geführt werden kann.

Ein entsprechend linkes Aufnahmeelement ist derart ausgebildet, dass ein pilzförmiges in der Nut geführtes Befestigungsmittel von rechts nach links orientiert, das abgeschrägte Ende des federbelasteten Kipphebels anhebt und das Hebelende passiert und das stumpf ausgebildete Hebelende mittels der Federkraft das pilzförmige in der Nut laufende Befestigungsmittel gegen eine Rückorientierung nach rechts blockiert.

Ein entsprechend rechtes Aufnahmeelement ist dagegen derart ausgebildet, dass ein pilzförmiges in der Nut geführtes Befestigungsmittel von links nach rechts orientiert, das abgeschrägte Ende des federbelasteten Kipphebels anhebt und das Hebelende passiert und das stumpf ausgebildete Hebelende mittels der Federkraft das pilzförmige in der Nut laufende Befestigungsmittel gegen eine Rückorientierung nach links blockiert.

Mit dieser Ausführung von an der Taschenrückseite angeordneten rechten und linken Aufnahmeelementen ist es möglich eine Tasche mit ihrem Führungselement zunächst in das unteren Befestigungselement einzuführen wo sie bereits gehalten wird aber kippbar bleibt. Danach ist die Tasche so weit zu kippen, dass eines der Aufnahmeelemente eine Position zwischen dem Abstand der beiden oberen am Gepäckträger positionierten Befestigungsmitteln erreicht. Die Tasche kann dann bei leichtem Druck in Richtung Gepäckträger nach rechts oder links geschwenkt werden wobei die Nuten der Führungselemente in die pilzförmigen Befestigungselemente einfahren und die vergrößerten Köpfe umgreifen. Bevorzugt ist die Anordnung der Aufnahmeelemente an der Taschenrückseite derart angeordnet, dass die Tasche beim nach vorne kippen der Tasche befestigt wird. Hierbei wird eine rechts am Gepäckträger angeordnete Tasche beim nach vorne Kippen mit ihrem von hinten betrachteten rechten Aufnahmeelement, welches in das weiter hinten am Gepäckträger angeordnete Befestigungselement einfährt, fixiert. Beim nach vorne Kippen der Tasche wird dabei der Kipphebel des rechten Aufnahmeelements gegen die Federkraft vom Befestigungselement nach oben weggedrückt und blockiert anschließend den Weg zum Zurückschwenken der Tasche nach hinten.

Der Kipphebel des entsprechend linken Aufnahmeelements hingegen ist derart ausgebildet und angeordnet, dass das Durchfahren des pilzförmigen Befestigungselementes durch den Kipphebel in einer definierten Position blockiert ist. Die Position ist dabei die gewünschte Aufhängeposition der Tasche an dem Gepäckträger in welcher das linke Aufnahmeelement ein weiteres Kippen der Tasche nach vorne blockiert und das rechte Aufnahmeelement das pilzförmige Befestigungselement gerade in der Position hinter den gegen die Federkraft weggedrückten Kipphebel verriegelt.

In dieser Aufhängeposition ist die Tasche an dem Gepäckträger fixiert und verriegelt und kann sich weder durch Kippen nach vorne, nach hinten oder durch Anheben vom Gepäckträger lösen.

Die beiden oberen Enden der Kipphebel sind bevorzugt mit einer gemeinsam zu bedienenden Handhabe ausgerüstet, welche beim Betätigen dieser, die beiden Kipphebel gleichzeitig in entgegengesetzte Richtungen drehen. Dabei werden jeweils die unteren Enden der Kipphebel mit ihren in eine Richtung orientierten abgeschrägten Enden aus den Nuten herausgeschwenkt, womit jegliche Blockierung der Bewegung der pilzförmigen Befestigungselemente in den Nuten der Aufnahmevorrichtungen gelöst ist. Die Tasche kann in dieser, die Handhabe betätigten, die Blockierung aufhebenden Stellung leicht, ohne die Tasche dabei anheben zu müssen nach vorne oder nach hinten gekippt und gelöst werden. Anschließend kann die Tasche auch von der Führung des unteren Führungselements in das untere am Gepäckträger angeordnete Befestigungselement abgenommen werden.

Die Handhabe zur Betätigung der Aufnahmeelemente kann in einer Ausführungsvariante als Seilzug ausgeführt sein, dieser kann als Griff der Tasche ausgebildet sein oder mit dieser ans Handhabe verbindbar oder mit dieser anlenkbar ausgeführt sein.

In einer bevorzugen Ausführung der Erfindung sind die beiden als rechte und/oder linke Aufnahmevorrichtung ausgebildeten Elemente aus einer Grundplatte, welche bevorzugt direkt wasserdicht mit der Taschenrückseite verbunden sind und dem Hebelelement mit einer bevorzugt als Schenkelfeder ausgeführten Feder, dem entsprechenden Kipphebel und einer Abdeckplatte ausgebildet. Die Abdeckplatte ist bevorzugt auf die Grundplatte auf- und/oder anschraubbar und deckt den oberen Bereich des Kipphebels wenigstens zu einem Teil ab und bildet einen Teil des Nutüberstandes an welchem der vergrößerte Bereich des pilzförmigen Befestigungsmittels gegriffen wird.

In einer besonders bevorzugten Ausführung sind jeweils die Grundplatten des unteren Führungselements und die Grundplatten der beiden oberen, linken und rechten Aufnahmevorrichtungen mit der Rückseite der Tasche wasserdicht verschweißbar. Zum besseren Einführen und Hineingleiten der Befestigungselemente in die Führungsvorrichtung und/oder die Aufnahmevorrichtungen sind diese nach einer Ausführung der Erfindung mit Anlaufschrägen ausgerüstet.

Im Folgenden wird die Erfindung anhand von Zeichnungen beispielhaft näher beschrieben, dabei zeigen:
Fig.1 eine Rückseite einer Tasche mit unterem Führungselement und rechtem (A) und linkem (B) Aufnahmeelement
Fig. 2 eine vergrößerte Darstellung des linken Aufnahmeelements (B) mit abgenommener Abdeckung.
Fig. 3 eine vergrößerte Darstellung des rechten Aufnahmeelements (A) mit abgenommener Abdeckung.
Fig. 4 eine Ansicht der beiden Aufnahmeelemente mit gemeinsamer Handhabe
Fig. 5 eine Zusammenbauansicht der Aufnahmeelemente auf der Taschenrückseite

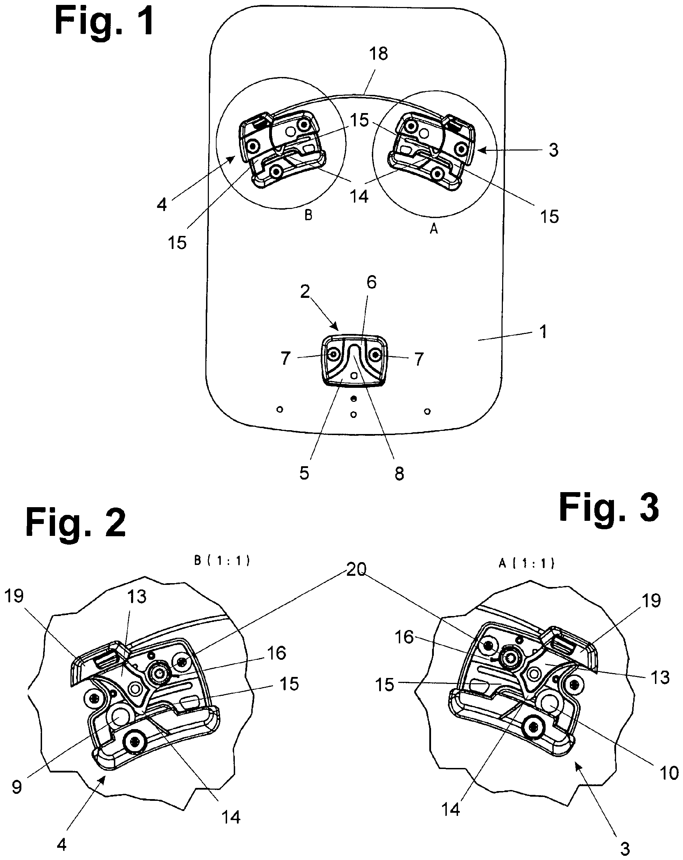

In der Fig. 1 ist symbolisch die Rückseite einer Tasche oder eines Behälters 1 gezeigt, welche mit einem unteren Führungselement 2 und einem darüber angeordneten rechten 3 und einem linken 4 Aufnahmeelement ausgerüstet ist. In der gezeigten Ausbildung ist die Grundplatte 5 des Führungselementes 2 direkt mit der Taschenrückseite 1 verschweißt und eine Abdeckung 6 mittels Schrauben 7 an der Grundplatte 5 angeschraubt. Die Abdeckung 6 besitzt eine gewisse Stärke und erreicht somit einen Zwischenraum über der Grundplatte und besitzt weiterhin eine Nut 8 mit Anlaufschrägen. In diese Nut kann die Tasche mit dem Führungselement 2 in ein pilzförmiges Befestigungselement, welches an einem Gepäckträger angebracht ist eingeführt werden und ist dabei zunächst um diesen Punkt drehbar durch Kippen der Tasche nach vorne und/oder hinten parallel zum Gepäckträger.

Am Gepäckträger (nicht gezeigt) sind neben diesem unteren pilzförmigen Befestigungsmittel zwei, weiter oben am Gepäckträger angeordnete weitere pilzförmige Befestigungsmittel 9, 10 angeordnet. Die beiden oberen, am Gepäckträger angeordneten pilzförmigen Befestigungsmittel 9, 10 werden dann beim Anbringen der Tasche am Gepäckträger mit den Aufnahmeelementen 3, 4 in Verbindung gebracht und in diesen gehalten und/oder verriegelt und/oder fixiert.

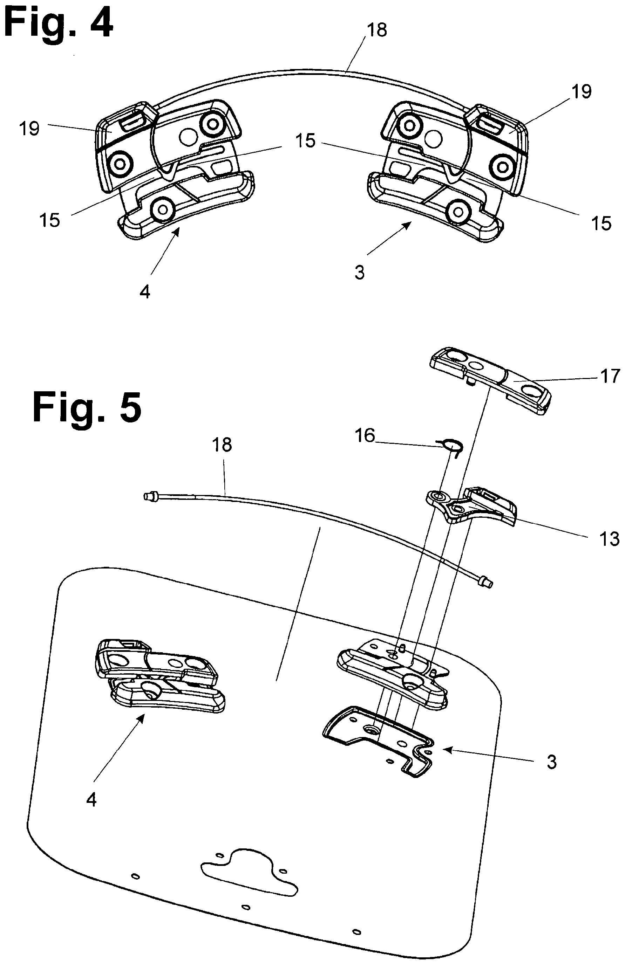

Die beiden Aufnahmeelemente 3, 4 , wie in den Fig. 2, 3, 4 und 5 zu sehen, sind als rechtes 3 Aufnahmeelement und linkes 4 Aufnahmeelement ausgebildet wobei in den Grundplatten 11 der Aufnahmeelemente 3, 4 jeweils die Drehachsen 12 für die Kipphebel 13 seitenverkehrt angeordnet sind. Dadurch lässt sich ein Aufnahmeelement jeweils nur in eine Richtung in ein Befestigungsmittel einschieben, in die jeweils andere Richtung blockiert das untere, abkragende Ende 14 des Kipphebels diese Bewegung.

Beispielsweise kann das linke Aufnahmeelement 4 wie in Fig. 2 unter B gezeigt gegen ein pilzförmiges Befestigungselement 9 nicht nach links bewegt werden, hier blockiert das Ende 14 des um die Drehachse 12 gelagerten Kipphebels 13 die Bewegung des Aufnahmeelements 4 über das Befestigungsmittel 9. Der Kipphebel 13 in dem linken Aufnahmeelement 4 kann gegen die Federkraft der Feder 16 nur rechtsdrehend bewegt werden, in dieser gezeigten Position verriegelt das Ende des Kipphebels.

Wäre das Befestigungsmittel 9 in Fig. 2 auf der rechten Seite des Endes 14 des Kipphebels 13, könnte das Aufnahmeelement 4 mit dem in der Nut 15 geführten Befestigungselements 9 nach rechts bewegt werden und das Befestigungsmittel würde das Ende 14 des drehbar gelagerten Kipphebels 13 gegen die Federkraft der Feder 16 nach oben wegdrücken. Nach dem Durchlaufen würde das Ende des Kipphebels hinter dem Befestigungsmittel eine Rückbewegung blockieren.

In Fig. 3 hingegen ist das Befestigungsmittel 10 durch Durchlaufen in der Nut bereits hinter das Ende 14 des Kipphebels positioniert und ist in dieser Position blockiert. Die Abbildungen in der Zusammenschau von Fig. 2 mit Fig. 3 zeigen die Aufhängeposition der Tasche an einem Gepäckträger.

Die Tasche, deren unteres Führungselement 2 zunächst in ein unteres, rechts an einem Gepäckträger positioniertes Befestigungsmittel eingeführt wurde, ist zunächst drehbar um diesen Punkt kippbar. Nun wird die Tasche so gehalten, dass das rechte Aufnahmeelement 3, in Fig. 3 gezeigt, beim Kippen in Fahrtrichtung, also nach vorne, von rechts nach links über das Befestigungsmittel 10 geführt wird. Das untere Ende 14 des gem. Fig. 3, linksdrehenden Kipphebels 13 wird gegen die Federkraft nach oben gedrückt, des Aufnahmeelement kann über das Befestigungsmittel 10 geführt werden und das Ende 14 des Kipphebels 13 fährt direkt hinter dem Befestigungsmittel 10 zurück und blockiert die Bewegung des Aufnahmeelements 3 in Richtung rechts.

Bei der Einführung und Hindurchfahren des Befestigungsmittels 10 durch die Bewegung des Aufnahmeelements 3 nach links, bewegt sich gleichzeitig das Aufnahmemittel 4 in Richtung des Befestigungsmittels 9 und wird von der Nut 15 erfasst, bis es an dem unteren Ende 14 des rechtsdrehend angeordneten Kipphebels 13, wie in Fig. 2 dargestellt, blockiert wird.

In dieser Position, wie in Zusammenschau von Fig. 2 und Fig. 3 gezeigt, ist die Tasche in ihrer Aufhängeposition fixiert, sie kann weder nach unten gleiten, da sie dort mit dem Führungselement 2 in dem unteren Befestigungsmittel aufliegt, noch kann sie nach links oder rechts wegschwenken, da hier jeweils ein Ende eines Kipphebels die Kippbewegung der Tasche in je eine Richtung verhindert.

Erst das Herausschwenken der Enden 14 der Kipphebel 13 aus den Durchlaufnuten 15 ermöglicht ein Kippen der Tasche und somit das Lösen der Tasche von den Befestigungsmitteln am Gepäckträger. Dazu verfügen die beiden Aufnahmevorrichtungen 3, 4 über eine gemeinsame Handhabe 18, welche bei Betätigung die Enden 19 der Kipphebel 13 nach oben ziehen. Mit Zug an der Handhabe 18 wird der Kipphebel des rechten Aufnahmeelements 3 nach links gedreht, während der Kipphebel des linken Aufnahmeelements 4 nach rechts gedreht wird. Hierbei bewegen sich die Enden 14 der beiden spiegelverkehrt angeordneten Aufnahmeelemente jeweils nach oben und geben die Durchlaufnuten der Aufnahmeelemente jeweils komplett frei. Die Tasche kann nun, ohne diese nach oben anheben zu müssen einfach aus den Aufnahmeelementen herausgekippt werden.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Befestigungs-, Fixier- und/oder Arretierungssystem für Behältnisse an einer Befestigungsvorrichtung, insbesondere an einem Träger wie einem Gepäckträger an welchem Befestigungspunkte angebracht und/oder positionierbar sind, welche mit, an einer Tasche oder einem Behälter angeordneten Aufnahmeelementen korrespondieren und die Tasche oder den Behälter in einer definierten Position mittels wenigstens eines unteren, an der Tasche- oder Behälterrückseite anbringbaren Führungselementes und zweier oberer an der Tasche- oder Behälterrückseite anbringbaren Aufnahmeelementen am Träger lösbar fixieren, **dadurch gekennzeichnet,**
**dass** die beiden im oberen Bereich an der Taschen- oder Behälterrückseite (1) anbringbaren Aufnahmeelemente (3, 4) entlang einer Kreisbahn angeordnet sind und mit einer im Wesentlichen durchlaufenden, der Kreisbahn folgenden, Führungsnut (15) mit Überstand für die Aufnahme eines pilzförmigen Befestigungsmittels (9, 10), welches am Gepäckträger anordenbar ist, ausgebildet sind, wobei jedes Aufnahmeelement (3, 4) mit einem federbelasteten, um eine Achse (20) drehbar gelagerten Kipphebel (13) ausgerüstet ist und jeweils ein Ende (19) des Kipphebels in Richtung Taschen- oder Behälteroberkannte ragt und das andere, in eine Richtung orientiert abgeschrägte Ende (14) in die Führungsnut mit Überstand des Aufnahmeelements hineinragt und gegen die Federkraft (16) mittels eines durchschiebenden, pilzförmigen Befestigungsmittels (9, 10), nur in eine Richtung bewegbar ist.

2. Befestigungs-, Fixier- und/oder Arretierungssystem nach Anspruch 1,
**dadurch gekennzeichnet,**
**dass** ein linkes (4) Aufnahmeelement derart ausgebildet ist, dass ein pilzförmiges in der Nut (15) geführtes Befestigungsmittel (9) bei Bewegung des Aufnahmeelements (4) von links nach rechts, das abgeschrägte Ende des federbelasteten Kipphebels (13) anhebt und das Hebelende (14) passiert und das stumpf ausgebildete Hebelende mittels der Federkraft (16) das pilzförmige in der Nut laufende Befestigungsmittel gegen eine Rückorientierung des Aufnahmeelements nach links blockiert.

3. Befestigungs-, Fixier- und/oder Arretierungssystem nach Anspruch 1,
**dadurch gekennzeichnet,**
**dass** ein rechtes Aufnahmeelement (3) derart ausgebildet ist, dass ein pilzförmiges in der Nut geführtes Befestigungsmittel (10) bei Bewegung des Aufnahmeelements (3) von rechts nach links das abgeschrägte Ende des federbelasteten Kipphebels (13) anhebt und das Hebelende passiert und das stumpf ausgebildete Hebelende (14) mittels der Federkraft (16) das pilzförmige in der Nut laufende Befestigungsmittel (10) gegen eine Rückorientierung des Aufnahmeelements nach rechts blockiert.

4. Befestigungs-, Fixier- und/oder Arretierungssystem nach Anspruch 1,
**dadurch gekennzeichnet,**
**dass** die Kipphebel (13) des rechten und linken Aufnahmeelements (4, 3) mit einer gemeinsam zu bedienenden Vorrichtung (18) ausgerüstet sind, welche die beiden Kipphebel (13) gleichzeitig betätigt und die Blockierung der pilzförmigen Befestigungsmittel (9, 10) in der jeweiligen Nut (15) löst.

5. Befestigungs-, Fixier- und/oder Arretierungssystem nach einem der Ansprüche 1 bis 4,
**dadurch gekennzeichnet,**
**dass** das Federelement (16) als Schenkelfeder auf der Drehachse (20) des Kipphebels (13) ausgeführt ist.

6. Befestigungs-, Fixier- und/oder Arretierungssystem nach Anspruch 1,
**dadurch gekennzeichnet,**
**dass** das Aufnahmeelement als Einheit aus einer Grundplatte, der Kipphebelmechanik und einer Deckplatte (17) ausgebildet ist.

7. Befestigungs-, Fixier- und/oder Arretierungssystem nach Anspruch 1,
**dadurch gekennzeichnet,**
**dass** die Grundplatte des Aufnahmeelements und/oder Führungselements wasserdicht mit der Rückseite einer Tasche oder eines Behälters verbindbar ist.

8. Befestigungs-, Fixier- und/oder Arretierungssystem nach Anspruch 1 und 7,
**dadurch gekennzeichnet,**
**dass** die Grundplatte des Aufnahmeelements und/oder Führungselements mit der Rückseite einer Tasche oder eines Behälters verschweißbar ist.

9. Befestigungs-, Fixier- und/oder Arretierungssystem nach Anspruch 1 und 4,
**dadurch gekennzeichnet,**
**dass** die gemeinsam zu bedienende Vorrichtung als Seilzug zwischen den nach oben orientierten Enden (19) der Kipphebel (13) ausgeführt ist.

10. Befestigungs-, Fixier- und/oder Arretierungssystem nach Anspruch 1,4 und 9,
**dadurch gekennzeichnet,**
**dass** die gemeinsam zu bedienende Vorrichtung als Tragegriff einer Tasche ausgebildet oder mit dieser verbindbar ist.

11. Befestigungs-, Fixier- und/oder Arretierungssystem nach Anspruch 1,
**dadurch gekennzeichnet,**
**dass** das untere, an der Tasche- oder Behälterrückseite anordenbare Führungselement mit einer Anlaufschräge ausgebildet ist.

12. Befestigungs-, Fixier- und/oder Arretierungssystem nach Anspruch 1,
**dadurch gekennzeichnet,**
**dass** die Kreisbahn, entlang welcher die oberen Aufnahmeelemente und die Führungsnuten angeordnet sind oder verlaufen, von einem Kreis mit Mittelpunkt des unteren Führungselementes und Radius zwischen Führungselement und Aufnahmeelementen gebildet ist.

## Claims

1. A fastening, fixing and/or blocking system for containers on a fastening device, in particular on a carrier such as a luggage carrier, fastening points being attached and/or being able to be positioned thereon, said fastening points corresponding to receiving elements arranged on a bag or a container and releasably fixing the bag or the container to the carrier in a defined position by means of at least one lower guide element which may be attached to the rear face of the bag or container and two upper receiving elements which may be attached to the rear face of the bag or container,
**characterised in that**
the two receiving elements (3, 4) which may be attached in the upper region to the rear face of the bag or container (1) are arranged along a circular path and are configured with a substantially continuous guide groove (15) following the circular path, with a projection for receiving a mushroom-shaped fastening means (9, 10) which is able to be arranged on the luggage carrier, wherein each receiving element (3, 4) is provided with a spring-loaded tilting lever (13) which is rotatably mounted about an axis (20) and in each case an end (19) of the tilting lever protrudes in the direction of the upper edge of the bag or container and the other chamfered end (14) which is oriented in one direction protrudes into the guide groove with a projection of the receiving element and is movable in only one direction counter to the spring force (16) by means of a mushroom-shaped fastening means (9, 10) being urged along.

2. The fastening, fixing and/or blocking system according to Claim 1,
**characterised in that**
a left-hand (4) receiving element is configured such that, when the receiving element (4) is moved from left to right, a mushroom-shaped fastening means (9) which is guided in the groove (15) lifts the chamfered end of the spring-loaded tilting lever (13) and passes the lever end (14) and the lever end, which is configured in a blunt manner, blocks the mushroom-shaped fastening means running in the groove by means of the spring force (16) against a rearward orientation of the receiving element to the left.

3. The fastening, fixing and/or blocking system according to Claim 1,
**characterised in that**
a right-hand receiving element (3) is configured such that, when the receiving element (3) is moved from right to left, a mushroom-shaped fastening means (10) which is guided in the groove lifts the chamfered end of the spring-loaded tilting lever (13) and passes the lever end, and the lever end (14), which is configured in a blunt manner, blocks the mushroom-shaped fastening means (10) running in the groove by means of the spring force (16) against a rearward orientation of the receiving element to the right.

4. The fastening, fixing and/or blocking system according to Claim 1,
**characterised in that**
the tilting levers (13) of the right-hand and left-hand receiving element (4, 3) are provided with a device (18) which is to be operated simultaneously and which at the same time actuates the two tilting levers (13) and releases the blocking of the mushroom-shaped fastening means (9, 10) in the respective groove (15).

5. The fastening, fixing and/or blocking system according to one of Claims 1 to 4,
**characterised in that**
the spring element (16) is designed as a leg spring on the rotational axis (20) of the tilting lever (13).

6. The fastening, fixing and/or blocking system according to Claim 1,
**characterised in that**
the receiving element is configured as a unit made up of a base plate, the tilting lever mechanism and a cover plate (17).

7. The fastening, fixing and/or blocking system according to Claim 1,
**characterised in that**
the base plate of the receiving element and/or guide element is able to be connected in a watertight manner to the rear face of a bag or a container.

8. The fastening, fixing and/or blocking system according to Claim 1 and 7,
**characterised in that**
the base plate of the receiving element and/or the guide element is able to be welded to the rear face of a bag or a container.

9. The fastening, fixing and/or blocking system according to Claim 1 and 4,
**characterised in that**
the device to be operated simultaneously is designed as a cable pull between the upwardly oriented ends (19) of the tilting levers (13).

10. The fastening, fixing and/or blocking system according to Claim 1, 4 and 9,
**characterised in that**
the device to be operated simultaneously is configured as a carrying handle of a bag or is able to be connected thereto.

11. The fastening, fixing and/or blocking system according to Claim 1,
**characterised in that**
the lower guide element which is able to be arranged on the rear face of the bag or container is configured with a lead-in chamfer.

12. The fastening, fixing and/or blocking system according to Claim 1,
**characterised in that**
the circular path, along which the upper receiving elements and the guide grooves are arranged or run, is formed by a circle with a central point of the lower guide element and a radius between the guide element and the receiving elements.

## Revendications

1. Système de fixation, de fixage et/ou de blocage pour des contenants sur un dispositif de fixation, notamment sur un support comme un porte-bagages sur lequel sont montés et/ou peuvent être positionnés des points de fixation, lesquels correspondent à des éléments de logement disposés sur un sac ou un conteneur et fixent de façon détachable sur le support le sac ou le conteneur dans une position définie au moyen d'au moins un élément de guidage inférieur pouvant être monté sur la face arrière du sac ou du conteneur et de deux éléments de logement supérieurs pouvant être montés sur la face arrière du sac ou du conteneur,
**caractérisé en ce que**
les deux éléments de logement (3,4) pouvant être montés dans la zone supérieure sur la face arrière de sac ou du conteneur (1) sont disposés le long d'une trajectoire circulaire et sont constitués avec une rainure de guidage (15) pour l'essentiel continue, suivant la trajectoire circulaire avec projection pour le logement d'un moyen de fixation (9,10) en forme de champignon, lequel peut être disposé sur le porte-bagages, chaque élément de logement (3,4) étant équipé d'un levier basculant (13) sous effet de ressort, logé pouvant tourner autour d'un axe (20) et une extrémité (19) du levier basculant dépassant respectivement en direction du bord supérieur de sac ou de conteneur et l'autre extrémité (14) chanfreinée orientée dans une direction entrant dans la rainure de guidage avec projection de l'élément de logement et pouvant être mobile contre la force élastique (16) uniquement dans une direction au moyen d'un moyen de fixation (9,10) coulissant, en forme de champignon.

2. Système de fixation, de fixage et/ou de blocage selon la revendication 1,
**caractérisé en ce**
**qu'**un élément de logement gauche (4) est constitué de telle sorte qu'un moyen de fixation (9) en forme de champignon, guidé dans la rainure (15) lève de gauche à droite l'extrémité chanfreinée du levier basculant (13) sous effet de ressort lors du déplacement de l'élément de logement (4) et passe l'extrémité du levier (14) et l'extrémité de levier constituée tronquée bloque vers la gauche au moyen de la force élastique (16) le moyen de fixation en forme de champignon passant dans la rainure contre une réorientation de l'élément de logement.

3. Système de fixation, de fixage et/ou de blocage selon la revendication 1,
**caractérisé en ce**
**qu'**un élément de logement droit (3) est constitué de telle sorte qu'un moyen de fixation (10) en forme de champignon guidé dans la rainure lève de droite à gauche l'extrémité chanfreinée du levier basculant (13) sous effet de ressort lors du déplacement de l'élément de logement (3) et passe l'extrémité du levier et l'extrémité du levier (14) constituée tronquée bloque vers la gauche au moyen de la force élastique (16) le moyen de fixation (10) en forme de champignon passant dans la rainure contre une réorientation de l'élément de logement.

4. Système de fixation, de fixage et/ou de blocage selon la revendication 1,
**caractérisé en ce que**
les leviers basculants (13) de l'élément de logement gauche et droit (4,3) sont équipés d'un dispositif à actionner conjointement (18), lequel actionne simultanément les deux leviers basculants (13) et desserre le blocage des moyens de fixation en forme de champignon (9,10) dans la rainure respective (15).

5. Système de fixation, de fixage et/ou de blocage selon l'une quelconque des revendications 1 à 4,
**caractérisé en ce que**
l'élément à ressort (16) est exécuté sous la forme d'un ressort à branches sur l'axe de rotation (20) du levier basculant (13).

6. Système de fixation, de fixage et/ou de blocage selon la revendication 1,
**caractérisé en ce que**
l'élément de logement est constitué sous la forme d'une unité composée d'une plaque de base, du mécanisme de levier basculant et d'une plaque de couverture (17).

7. Système de fixation, de fixage et/ou de blocage selon la revendication 1,
**caractérisé en ce que**
la plaque de base de l'élément de logement et/ou de l'élément de guidage peut être relié de manière étanche à l'eau à la face arrière d'un sac ou d'un conteneur.

8. Système de fixation, de fixage et/ou de blocage selon les revendications 1 et 7,
**caractérisé en ce que**
la plaque de base de l'élément de logement et/ou de l'élément de guidage peut être soudée à la face arrière d'un sac ou d'un conteneur.

9. Système de fixation, de fixage et/ou de blocage selon les revendications 1 et 4,
**caractérisé en ce que**
le dispositif à actionner conjointement est exécuté sous la forme d'un câble de traction entre les extrémités (19) orientées vers le haut des leviers basculants (13).

10. Système de fixation, de fixage et/ou de blocage selon les revendications 1, 4 et 9,
**caractérisé en ce que**
le dispositif à actionner conjointement est constitué sous la forme d'une poignée de transport d'un sac ou peut être relié à celui-ci.

11. Système de fixation, de fixage et/ou de blocage selon la revendication 1,
**caractérisé en ce que**
l'élément de guidage inférieur, pouvant être disposé sur la face arrière du sac ou du conteneur est constitué avec un chanfrein d'introduction.

12. Système de fixation, de fixage et/ou de blocage selon la revendication 1,
**caractérisé en ce que**
la trajectoire circulaire le long de laquelle sont disposés ou passent les éléments de logement supérieurs et les rainures de guidage, est formée par un cercle avec le centre de l'élément de guidage inférieur et le rayon entre l'élément de guidage et les éléments de logement.
